# EUROPEAN PATENT SPECIFICATION

(11) **EP 2 117 092 B1**
(45) Date of publication and mention of the grant of the patent: **05.07.2017**
(21) Application number: 08169573.6
(22) Date of filing: 20.11.2008
(51) Int. Cl.: H02G 3/18, F16L 3/233

(54) **Recessed tower for floor-mounted electrical installations comprising cable-holding fixing means**
Einbauturm für am Boden angebrachte elektrische Installationen mit Kabelhalte- und Kabelfixiermittel
Tour encastrée pour des installations électriques montées dans le sol et comprenant des moyens de retenue et fixation des câbles

(30) Priority: 05.05.2008 IT RM20080069 U
(43) Date of publication of application: 11.11.2009
(73) Proprietor: BTICINO S.P.A., Viale Borri, 231 21100 Varese (IT)
(72) Inventor: Ricciardi, Rocco, 21046 Malnate (Varese) (IT); Rosa, Massimo, 21040 Venegono Inferiore (Varese) (IT)
(74) Representative: Carangelo, Pierluigi

(56) References cited:
- US-A- 5 122 069
- US-A- 6 060 660

## Description

The present invention generally refers to the field of electrical installations, and, more particularly, to recessed towers for electrical floor mounted installations.

More in particular, the present invention refers to a recessed tower, according to the preamble of claim 1.

The recessed floor towers generally comprise a container body which defines a housing space for modular devices or electrical sockets, connection devices in general, such as plug sockets, TV sockets, telephone connectors and EDP connectors, which are grouped inside device holder supports. US 5,122,069 discloses an access floor module for use with wiring extending beneath the floor of a structure can be used with both high tension and low tension conductors. High tension and low tension outlets can be mounted on the front of a rotatable frame member. Cables are attached to the back and the frame can be inserted into the floor into the plenum beneath the access floor on the same level as the cables and the frame pivotably mounted with respect to the floor. The frame also provides structural support for the module cover. US 6,060,660 A discloses a consolidation point enclosure employing a two piece design in which a cover subassembly is removably mounted to a mounting plate. Sometimes, the device holder supports are comprised of device holder modules, of general box-like shape, each provided with one or more electrical devices, essentially like wall mounted boxes. An example of a tower, wherein the device holder supports are comprised of device holder modules, is described in European patent application EP 1 724 895.

In some instances, these device holder modules may be removably coupled to the tower, and are suitable for being inserted through suitable access openings, which are provided in the container body of tower, in order to be fixed to same tower. In particular, once they are fixed, the cased body of the device holder modules partially defines one or more walls of recessed tower.

The housing space of towers may be accessed by an operator through a main opening, which is protected by a treadable cover. The side walls and/or the base wall of the tower are provided with a plurality of predefined pre-cut entry portions, for electrical cables, of generally circular shape, which may be knocked through and removed to define the desired through openings for electrical cables, required for cabling of tower.

In towers of the known art, once the tower cabling is completed, it is necessary for the installation technician to collect the electrical cables and fix them in an ordered way to the same tower. This allows the tower and electrical cables to be easily moved during corresponding installation operations, reducing the hindrance created by free electrical cables.

One solution of the known art for solving such a problem foresees the fixing of electrical cables to tower, by using screwable cable clamps to be screwed onto the primary body of tower.

However, the above said cable clamps generally have predetermined and quite reduced size, which do not allow the connection of electrical cables, in a desirable way, to the primary tower body, when the number and/or size of these cables exceed predetermined values.

If the number and/or size of electrical cables exceed the respective values allowed by the clamp, the operator has therefore to provide makeshift solutions, which, among other things, cause the time for installation of tower to increase. In fact, the installation technician, after having tried, without success, to fix the electrical cables to the tower, needs time for thinking and putting into practice an alternative solution.

An object of the present invention is to provide a floor mounted recessed tower, such as to eliminate above said drawbacks with reference to the known art.

In particular, an object of the present invention is to provide a tower which allows a flexible and easy fixing of electrical cables to the same tower, reducing the limitations regarding the number and/or size of cables, imposed by the solutions of the known art.

Another object of the present invention is to reduce the time required for tower installation.

These and other objects are achieved by a recessed tower, as defined and characterized by appended claim 1, in its general form, and by the dependent claims, in some of its particular embodiments.

The invention will be more clearly understood through the following detailed description of one of its embodiments, which is provided as an example and is not intended to be limiting, with reference to appended drawings, in which:
- fig. 1 shows a perspective view of a recessed tower of the known art,
- fig. 2 shows a perspective view of a portion of the electrical device holder module which may be associated to the recessed tower of fig. 1,
- fig. 3 shows a view from below of the portion of electrical device holder module shown in fig. 2,
- fig. 4 shows a perspective view of the portion of the electrical device holder module of fig. 2, wherein the module is shown from a different angle;
- fig. 5 shows a perspective view of the portion of the electrical device holder module of fig. 2, wherein a cable fixing clamp is visible, which is coupled with the module; and
- fig. 6 shows a perspective view of a device holder module according to another embodiment.

In the following description, same or like elements shown in figures will be provided with the same reference numerals.

In the figures, 1 generally indicates a recessed tower for floor mounted electrical installations, comprising a container body 2 for defining a housing space 3 for electrical devices 7.

The tower 1 also comprises a cover 8, which is hinged to container body 2, at an edge thereof, and which is adapted to take up a position for closing the housing space 3, at the general level of a treadable plane, like for example a raised or floating floor.

The housing space 3 is defined by a bottom wall 4 and a pair of opposite side walls 5a, 5b. At the sides between the side walls 5a, 5b, device holder means 6 are arranged, each carrying at least one and preferably a plurality of devices or electrical sockets 7, in a substantially similar way to wall mounted boxes.

In a particularly preferred, though not limiting embodiment, the device holder means comprise device holder modules 6, which may be removably coupled to the tower 1, for example according to the description of published European patent application EP 1 724 895. More preferably, each module 6 has a generally box-like shape comprising a base portion, to which a cover element may be removably coupled, which acts like a supporting element for electrical devices.

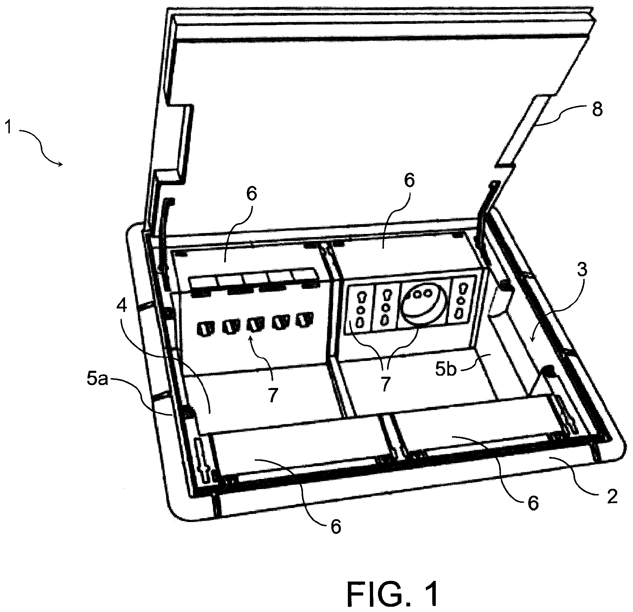

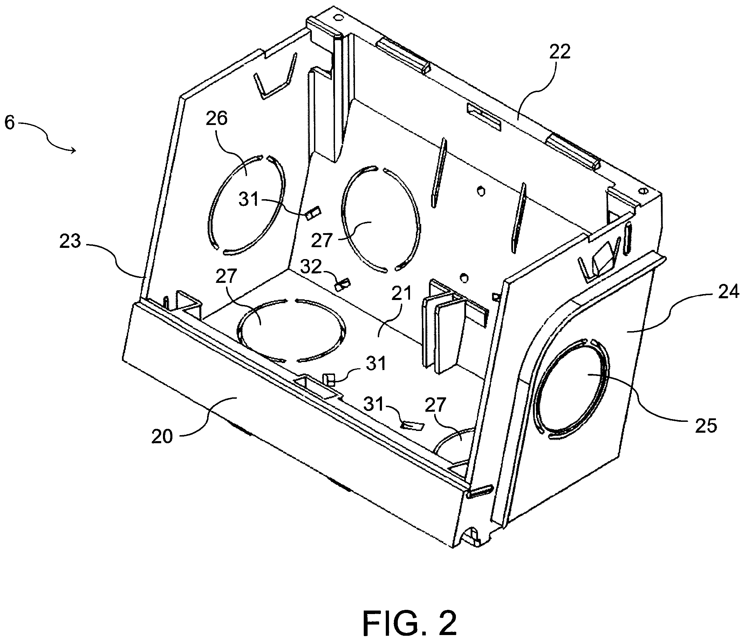

In fig. 2 a device holder module 6 is shown, from which the cover element has been removed. In other words, fig. 2 shows the base portion 20 of a device holder module 6. Such a base portion 20 comprises two opposite side walls 23, 24, and a base wall 21 and a rear wall 22, which are interposed between the side walls 23 and 24. It is to be noted that when module 6 is installed within a tower 1, the base wall 21 and the rear wall 22 of base portion 20 represent wall portions of container body 2 of tower 1, or, in other words, they also define the walls defining the housing space 3 of tower 1. At least one of side walls 23, 24 of base portion 20 provides a wall for container body 2 of tower 1, but only when module 6 is not installed between other two modules. For example, with reference to figs. 1 and 2, it may be appreciated that in the particular example shown, the side wall 23 represents a portion of wall 5a of container body 2 of module 6 installed near wall 5a, whereas side wall 24 represents a portion of wall 5a of container body 2 of a module 6 mounted near wall 5b.

In walls of base portion 20 of module 6, one or more generally circular pre-fractures are made, adapted to define corresponding weakened wall regions 25, 26, 27 capable of being knocked through and removed to form entry openings for the connection cables, which have to pass through the side walls and base wall of container body 2 in order to connect the electrical devices 7 housed within the turret 1 to energy and/or signal distribution networks.

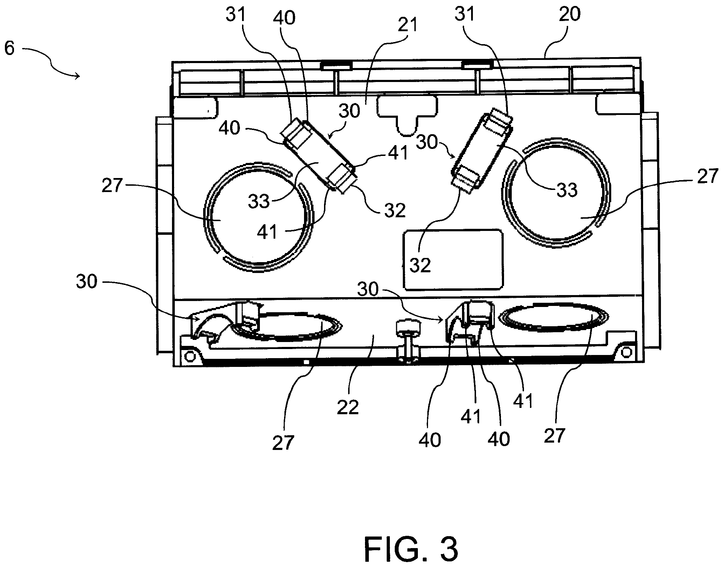

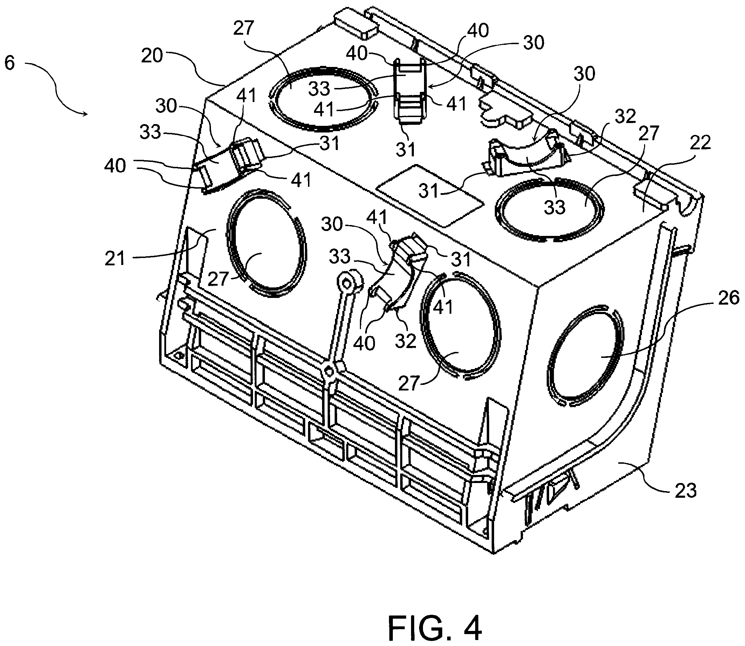

With reference to figs. 3, 4 and 5, a module 6 of tower 1 comprises fixing means 30 for fixing at least one electrical cable, for tower cabling, to a wall of tower 1. In particular, these fixing means 30 comprise a receiving seat 33 for partially receiving said at least one electrical cable.

Preferably, the fixing means 30 are positioned near a respective area of weakened breakable wall 27, for example at a minimum distance of 5-15 mm from said weakened wall 26, 27.

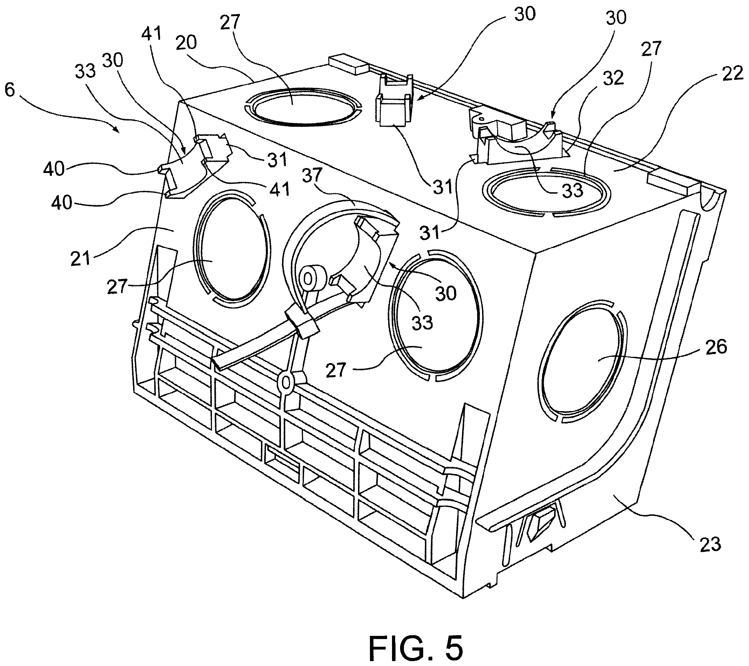

The fixing means 30 comprise a first and second slit 31, 32, which are arranged near two opposite ends of receiving seat 33. As can be seen in fig. 3, the first and second slit 31, 32 are such as to allow a cable clamp 37 (shown in fig. 5) to simultaneously pass through the same, for retaining the electrical cable fixed to a wall of tower 1, near the receiving seat 33. It is to be noted that it is not required that the cable clamp 37 and the receiving seat 33 directly interact with the electrical cable, since they may also interact with a corrugated tube containing one or more electrical cables, in order to fix said corrugated tube, and therefore said one or more cables, to tower 1. Preferably, the first and second slit are arranged at a mutual distance which is approximately within the range of 10 - 20 mm.

In a particularly preferred embodiment, the receiving seat has a receiving wall 33 adapted for coupling with an external surface of at least one electrical connection cable, the receiving wall 33 being arch shaped and concave towards that external surface of electrical cable.

Preferably, the first and second slit 31, 32 have a rectangular shape and more preferably, each of them has a short side with a length approximately between 0,5 mm and 3 mm and a long side, with a length approximately between 4 mm and 6 mm. In the specific example shown, the first and second slit 31, 32 are contiguous to two opposite ends of receiving seat 33, respectively, in particular being adjacent to said opposite ends, along the long side of rectangle.

In a particularly preferred embodiment, the fixing means 30 protrude from a wall of base portion of module 6, and include a base portion, proximal to said wall and a distal portion, with respect to said wall, the first and second slit 31, 32 being adjacent to said base portion and the receiving seat 33 being defined in said distal portion.

Preferably, the fixing means 30 comprise a first 40 and second 41 pair of mutually facing protrusions, each pair of protrusions being provided at an end portion of the receiving seat 33 and being such as to partially define a recess for receiving a portion of said cable clamp 37. More preferably, the pair of protrusions 40, 41 are contiguous to two opposite ends of receiving walls 33, respectively.

Based on the above description, it may therefore be evident that a recessed tower according to the present invention is such as to remove above said drawbacks with reference to the known art.

It is evident that modifications and/or changes may be applied to the above illustrative description and drawings.

For example, although the particular example in the description is referred to a recessed tower 1 comprising removable device holder modules 6, wherein the cable clamp fixing means 30 are coupled to walls of said modules, the teachings of the present invention may also be applied, in a altogether similar way, to recessed towers without removable device holder modules, wherein the above said fixing means are directly coupled to external walls of said recessed towers.

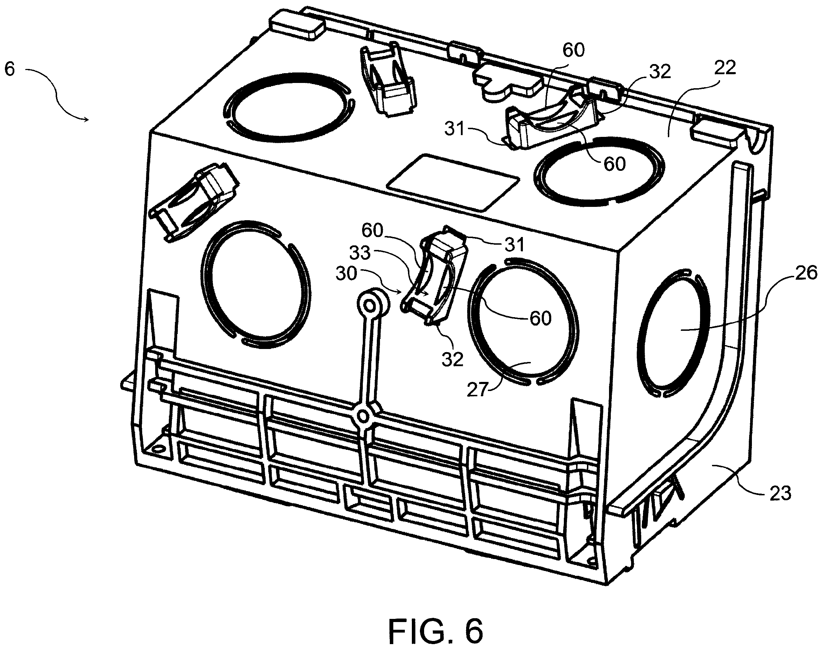

Fig. 6 shows a different embodiment of the device holder module 6, which is similar to the one described with reference to figs. 1-5, differing from the latter in the fact that the receiving wall 33 is provided with gripping means 60, which are provided for reducing and avoiding an undesirable slipping of cables along said wall 33. Preferably, such gripping means comprise a transversal protrusion 60, extending between an end portion proximal to one of the two slits and an opposite end portion proximal to the other slit. Preferably, this transversal protrusion 60 has a wedge-like contour, so that a free standing edge of said transversal protrusion 60 is provided for tangentially interfere with a cable, which has to be retained by the fixing means 30. Preferably, each receiving wall has a pair of transversal protrusions 60, which are parallel to each other.

Based on the principles set forth by the invention, the embodiments and the construction details may be amply varied with respect to the description and drawings which are provided only as a non limiting example, without departing from the scope of the invention, as defined by the appended claims.

## Claims

1. Recessed tower (1) for electrical floor mounted installations comprising a container body (2) defining an housing space for electrical devices, said tower also comprising a cover (8) hinged to the container body (2) at an edge thereof and which is adapted to take up a position for closing the housing space at the general level of a tradable plane, the recessed tower (1) comprising fixing means (30) coupled to a wall portion of the container body (2) for fixing at least one external electrical cable to said wall portion (1), for cabling the tower;
**characterized in that**:
- the fixing means (30) comprises a receiving seat (33) provided for partially receiving said at least one electrical cable;
- the receiving seat has a receiving wall (33) such as to cooperate with an external surface of an electrical cable, the receiving wall (33) being shaped like an arch with a concavity which is to be directed towards said external surface of the electrical cable; and
- the fixing means (30) comprise a first (31) and second (32) slit, respectively provided near two opposite ends of the receiving seat (33), the first and second slit (31, 32) being defined in said wall portion (1) and being such as to allow a cable clamp (37) to simultaneously pass through the same, in order to retain the electrical cable fixed to said wall portion near the receiving seat (33).

2. Recessed tower (1) according to claim 1, wherein the first and second slit (31, 32) have a rectangular shape.

3. Recessed tower (1) according to claim 2, wherein the first and second slit (31, 32), of rectangular shape, each comprise a short side with a length approximately between 0,5 mm and 3 mm, and a long side, with a length approximately between 4 mm and 6 mm.

4. Recessed tower (1) according to anyone of preceding claims, wherein the first and second slit (31, 32) are arranged in a contiguous way with respect to the two opposite ends of the receiving seat (33), being adjacent to said opposite ends, along the long side of the rectangle.

5. Recessed tower (1) according to anyone of preceding claims, wherein said fixing means (30) protrude from said wall of tower (1) and comprise a proximal base portion with respect to said wall and a distal portion with respect to said wall, the first and second slit (31, 32) being adjacent to said base portion and said receiving seat (33) being defined in said distal portion.

6. Recessed tower (1) according to anyone of preceding claims wherein said fixing means (30) comprise a first (40) and second (41) pair of mutually opposed protrusions, each pair (40, 41) of protrusions being arranged at one end portion of the receiving seat (33) and being such as to partially define a recess for receiving a portion of said cable clamp (37).

7. Recessed tower (1) according to claim 6, wherein the pairs of protrusions (40, 41) are respectively contiguous to two opposite ends of the receiving wall (33).

8. Recessed tower (1) according to claim 1, wherein the receiving wall (33) is provided with gripping means (60) for reducing or avoiding a slipping of cables along said receiving wall (33).

9. Recessed tower (1) according to claim 8, wherein said gripping means (60) comprise a transversal protrusion (60), extending between an end portion proximal to said first slit and an opposite end portion, proximal to said second slit.

10. Recessed tower (1) according to claim 9, wherein the transversal protrusion (60) has a wedge-like contour, so that a free edge of said transversal protrusion (60) is to tangentially interfere with a cable to be retained by the fixing means (30).

11. Recessed tower (1) according to claim 10, wherein said receiving wall (33) comprises two transversal protrusions (60), which are parallel to each other.

12. Recessed tower (1) according to any of the previous claims, wherein said wall portion comprises a weakened wall region (26,27) and wherein said fixing means (30) are positioned near said weakened wall region.

13. Recessed tower (1) according to anyone of the preceding claims, further comprising at least one electrical device holder module (6) removably coupled to the recessed tower (1), said module (6) comprising the fixing means (30) for fixing the cable to said wall portion (1) of the module (6).

## Patentansprüche

1. Eingesenkter Turm (1) für elektrische Bodeninstallationen, der einen Behälterkörper (2) aufweist, der einen Gehäuseraum für Elektrogeräte definiert, wobei der Turm auch eine Abdeckung (8) aufweist, die an einer Kante des Gehäusekörpers (2) an denselben angelenkt ist und die dazu angepasst ist, eine Position zum Schließen des Gehäuseraums auf der allgemeinen Höhe einer begehbaren Ebene einzunehmen, wobei der eingesenkte Turm (1) eine mit einem Wandabschnitt des Behälterkörpers (2) gekoppelte Befestigungseinrichtung (30) zum Befestigen zumindest eines elektrischen Außenkabels an dem Wandabschnitt (1) zum Verkabeln des Turms aufweist;
**dadurch gekennzeichnet, dass**
- die Befestigungseinrichtung (30) einen Aufnahmesitz (33) aufweist, der zum teilweisen Aufnehmen des zumindest einen elektrischen Kabels vorgesehen ist;
- der Aufnahmesitz eine Aufnahmewand (33) aufweist, um mit einer Außenoberfläche eines elektrischen Kabels zusammenzuwirken, wobei die Aufnahmewand (33) wie ein Bogen mit einer Konkavität geformt ist, die auf die Außenoberfläche des elektrischen Kabels gerichtet sein soll; und
- die Befestigungseinrichtung (30) einen ersten (31) und einen zweiten (32) Schlitz aufweist, die jeweils in der Nähe eines von zwei gegenüberliegenden Enden des Aufnahmesitzes (33) vorgesehen sind, wobei der erste und der zweite Schlitz (31, 32) in dem Wandabschnitt (1) definiert sind und dahin gehend ausgelegt sind, zu ermöglichen, dass eine Kabelklemme (37) gleichzeitig durch denselben hindurch gelangt, um das elektrische Kabel, das an dem Seitenwandabschnitt in der Nähe des Aufnahmesitzes (33) befestigt ist, zu halten.

2. Eingesenkter Turm (1) gemäß Anspruch 1, bei dem der erste und der zweite Schlitz (31, 32) eine rechteckige Form aufweisen.

3. Eingesenkter Turm (1) gemäß Anspruch 2, bei dem der erste und der zweite Schlitz (31, 32) einer rechteckigen Form jeweils eine kurze Seite mit einer Länge von ungefähr zwischen 0,5 mm und 3 mm und eine lange Seite mit einer Länge von ungefähr zwischen 4 mm und 6 mm aufweisen.

4. Eingesenkter Turm (1) gemäß einem der vorhergehenden Ansprüche, bei dem der erste und der zweite Schlitz (31, 32) bezüglich der zwei gegenüberliegenden Enden des Aufnahmesitzes (33) auf zusammenhängende Weise angeordnet sind und entlang der langen Seite des Rechtecks zu den gegenüberliegenden Enden benachbart sind.

5. Eingesenkter Turm (1) gemäß einem der vorhergehenden Ansprüche, bei dem die Befestigungseinrichtung (30) von der Wand des Turms (1) vorsteht und einen proximalen Basisabschnitt bezüglich der Wand und einen distalen Abschnitt bezüglich der Wand aufweist, wobei sich der erste und der zweite Schlitz (31, 32) zu dem Basisabschnitt benachbart sind und der Aufnahmesitz (33) in dem distalen Abschnitt definiert ist.

6. Eingesenkter Turm (1) gemäß einem der vorhergehenden Ansprüche, bei dem die Befestigungseinrichtung (30) ein erstes (40) und ein zweites (41) Paar einander gegenüberliegender Vorsprünge aufweist, wobei jedes Paar (40, 41) von Vorsprüngen an einem Endabschnitt des Aufnahmesitzes (33) angeordnet ist und dahin gehend ausgelegt ist, teilweise eine Aussparung zum Aufnehmen eines Abschnitts der Kabelklemme (37) zu definieren.

7. Eingesenkter Turm (1) gemäß Anspruch 6, bei dem die Paare von Vorsprüngen (40, 41) jeweils mit zwei gegenüberliegenden Enden der Aufnahmewand (33) zusammenhängen.

8. Eingesenkter Turm (1) gemäß Anspruch 1, bei dem die Aufnahmewand (33) mit einer Greifeinrichtung (60) zum Verringern oder Vermeiden eines Verrutschens von Kabeln entlang der Aufnahmewand (33) versehen ist.

9. Eingesenkter Turm (1) gemäß Anspruch 8, bei dem die Greifeinrichtung (60) einen transversalen Vorsprung (60) aufweist, der sich zwischen einem Endabschnitt, der zu dem ersten Schlitz proximal ist, und einem gegenüberliegenden Endabschnitt, der zu dem zweiten Schlitz proximal ist, erstreckt.

10. Eingesenkter Turm (1) gemäß Anspruch 9, bei dem der transversale Vorsprung (60) eine keilartige Kontur aufweist, so dass eine freie Kante des transversalen Vorsprungs (60) ein Kabel, das durch die Befestigungseinrichtung (30) gehalten werden soll, tangential behindern soll.

11. Eingesenkter Turm (1) gemäß Anspruch 10, bei dem die Aufnahmewand (33) zwei transversale Vorsprünge (60) aufweist, die zueinander parallel sind.

12. Eingesenkter Turm (1) gemäß einem der vorhergehenden Ansprüche, bei dem der Wandabschnitt eine geschwächte Wandregion (26, 27) aufweist und bei dem die Befestigungseinrichtung (30) in der Nähe der geschwächten Wandregion positioniert ist.

13. Eingesenkter Turm (1) gemäß einem der vorhergehenden Ansprüche, der ferner zumindest ein Elektrogerät-Haltemodul (6) aufweist, das abnehmbar an den eingesenkten Turm (1) gekoppelt ist, wobei das Modul (6) die Befestigungseinrichtung (30) zum Befestigen des Kabels an dem Wandabschnitt (1) des Moduls (6) aufweist.

## Revendications

1. Tour encastrée (1) pour des installations électriques montées dans le sol comprenant un corps de contenant (2) définissant un espace de logement pour dispositifs électriques, ladite tour comprenant également un couvercle (8) s'articulant sur le corps de contenant (2) au niveau d'un bord de celui-ci et qui est adapté pour prendre une position pour fermer l'espace de logement au niveau général d'un plan échangeable, la tour encastrée (1) comprenant un moyen de fixation (30) couplé à une partie de paroi du corps de contenant (2) pour fixer au moins un câble électrique externe à ladite partie de paroi (1), pour câbler la tour ;
**caractérisée en ce que** :
- le moyen de fixation (30) comprend un siège de réception (33) prévu pour recevoir partiellement ledit au moins un câble électrique ;
- le siège de réception comporte une paroi de réception (33) de manière à coopérer avec une surface externe d'un câble électrique, la paroi de réception (33) ayant la forme d'une arche avec une concavité qui doit être dirigée vers ladite surface externe du câble électrique ; et
- le moyen de fixation (30) comprend des première (31) et seconde (32) fentes, respectivement disposées près de deux extrémités opposées du siège de réception (33), les première et seconde fentes (31, 32) étant définies dans ladite partie de paroi (1) et étant telles qu'elles permettent à un serre-câble (37) de les traverser simultanément, afin de retenir le câble électrique fixé à ladite partie de paroi près du siège de réception (33).

2. Tour encastrée (1) selon la revendication 1, dans laquelle les première et seconde fentes (31, 32) ont une forme rectangulaire.

3. Tour encastrée (1) selon la revendication 2, dans laquelle les première et seconde fentes (31, 32), de forme rectangulaire, comprennent chacune un côté court ayant une longueur approximativement entre 0,5 mm et 3 mm, et un côté long, ayant une longueur approximativement entre 4 mm et 6 mm.

4. Tour encastrée (1) selon l'une quelconque des revendications précédentes, dans laquelle les première et seconde fentes (31, 32) sont agencées d'une manière contiguë par rapport aux deux extrémités opposées du siège de réception (33), étant adjacent auxdites extrémités opposées, le long du côté long du rectangle.

5. Tour encastrée (1) selon l'une quelconque des revendications précédentes, dans laquelle ledit moyen de fixation (30) fait saillie depuis ladite paroi de tour (1) et comprend une partie de base proximale par rapport à ladite paroi et une partie distale par rapport à ladite paroi, les première et seconde fentes (31, 32) étant adjacentes à ladite partie de base et ledit siège de réception (33) étant défini dans ladite partie distale.

6. Tour encastrée (1) selon l'une quelconque des revendications précédentes, dans laquelle ledit moyen de fixation (30) comprend des première (40) et seconde (41) paires de saillies mutuellement opposées, chaque paire (40, 41) de saillies étant agencée au niveau d'une partie d'extrémité du siège de réception (33) et étant telle qu'elle définit partiellement un encastrement pour recevoir une partie dudit serre-câble (37).

7. Tour encastrée (1) selon la revendication 6, dans laquelle les paires de saillies (40, 41) sont respectivement contiguës à deux extrémités opposées de la paroi de réception (33).

8. Tour encastrée (1) selon la revendication 1, dans laquelle la paroi de réception (33) est pourvue d'un moyen de préhension (60) pour réduire ou éviter un glissement de câbles le long de ladite paroi de réception (33).

9. Tour encastrée (1) selon la revendication 8, dans laquelle ledit moyen de préhension (60) comprend une saillie transversale (60), s'étendant entre une partie d'extrémité proximale à ladite première fente et une partie d'extrémité opposée, proximale à ladite seconde fente.

10. Tour encastrée (1) selon la revendication 9, dans laquelle la saillie transversale (60) présente un contour en forme de cale, de telle sorte qu'un bord libre de ladite saillie transversale (60) doit tangentiellement interférer avec un câble à retenir par le moyen de fixation (30).

11. Tour encastrée (1) selon la revendication 10, dans laquelle ladite paroi de réception (33) comprend deux saillies transversales (60), qui sont parallèles l'une à l'autre.

12. Tour encastrée (1) selon l'une quelconque des revendications précédentes, dans laquelle ladite partie de paroi comprend une région de paroi affaiblie (26, 27) et dans laquelle ledit moyen de fixation (30) est positionné près de ladite région de paroi affaiblie.

13. Tour encastrée (1) selon l'une quelconque des revendications précédentes, comprenant en outre au moins un module de support de dispositif électrique (6) couplé de manière amovible à la tour encastrée (1), ledit module (6) comprenant le moyen de fixation (30) pour fixer le câble à ladite partie de paroi (1) du module (6).
